# EUROPEAN PATENT SPECIFICATION

(11) **EP 2 396 186 B1**
(45) Date of publication and mention of the grant of the patent: **18.03.2020**
(21) Application number: 10741659.6
(22) Date of filing: 10.02.2010
(51) Int. Cl.: B60J 10/17, B60J 10/50, B29C 48/00

(54) **CROSSLINKABLE ULTRAVIOLET (UV) CURED COATING OVER FLOCK FIBERS FOR IMPROVED PERFORMANCE**
VERNETZBARE UV-GEHÄRTETE BESCHICHTUNG VON FLOCKFASERN FÜR ERHÖHTE LEISTUNGSFÄHIGKEIT
REVÊTEMENT DURCI PAR ULTRAVIOLETS (UV) RÉTICULABLE SUR FIBRES FLOQUÉES POUR UNE PERFORMANCE AMÉLIORÉE

(30) Priority: 12.02.2009 US 152104 P
(43) Date of publication of application: 21.12.2011
(73) Proprietor: Cooper-Standard Automotive, Inc., Novi, MI 48375-5329 (US)
(72) Inventor: GOPALAN, Krishnamachari, Troy MI 48083 (US); PINTER, Michael, W., Chesterfield MI 48051 (US); LA FOREST, Jacob, J., Ypsilanti MI 48197 (US)
(74) Representative: Bankes, Stephen Charles Digby
(86) International application number: PCT/US2010/023747
(87) International publication number: WO 2010/093689

(56) References cited:
- GB-A- 2 271 067
- GB-A- 2 383 332
- US-A- 4 483 893
- US-A- 5 354 594
- US-A1- 2004 104 541
- US-A1- 2005 048 263
- US-A1- 2005 048 263
- US-A1- 2008 226 889

## Description

### BACKGROUND

This application claims the priority benefit of U.S. Provisional Application Serial No. 61/152,104, filed February 12, 2009.

The disclosure relates to a weatherstrip or weatherseal, and particularly one that includes a crosslinkable ultraviolet (UV) curable coating layer. The subject new weatherstrip finds use for improved performance where resistances to squeak and itch, and freeze release are required, for example, in an automotive vehicle.

Weatherstrips provided around a perimeter of an opening in a vehicle such as a door are common in the industry. For example, one or more weatherstrips are provided about the perimeter of a window in the door opening, for example along the A-pillar, header portion, B-pillar, etc. Furthermore, weatherstrips are also provided along the belt line between a window and the respective vehicle outer side and a vehicle inner side. Of course, these are exemplary and it is appreciated that weatherstrips are used in a wide variety of vehicle applications.

A known weatherstrip in a longitudinal body or strip may include a rigid core. It is common that the core is metal or a rigid, non-metal material while the body is an elastomer such as rubber or thermoplastic. The elastomer body may be molded or more commonly is extruded over the core.

In addition, flocked fibers or flock may be attached to at least a predetermined portion of the weatherstrip. The flocked fibers provide a low friction surface that selectively engages or abuts against the window and thus the need for low friction to allow the window to be more easily raised and lowered with reduced force. The flock also provides flexibility, squeak and itch resistance, freeze release and other desired properties. As an example, weatherstrips are initially coated with a low friction coating designed for squeak and itch and abrasion resistance. However, issues with squeak and itch resistance and abrasion to the seal were noted in the field. Therefore, the weatherstrip was modified from a coating to attaching flocked fibers or flock on selected portions of the weatherstrip.

It is also known to provide a temporary (i.e., non-cross-linkable) type coating, over the flocked fibers. Specific applications, such as a commercially available glass run seal, appear to use such a temporary and non-cross-linkable coating over flocked fibers.

Furthermore, although thermally cured cross-linkable coatings over flocked fibers have been suggested, for example in US 535,4594, these coatings present processing issues and capital equipment has already been invested for the flocking operation. Additional convection ovens would be required within the existing operation to cure the coating. Consequently, the processing time and equipment investment required for the thermally cured coating suggest that such modifications are not desired.

U.S. Patent Publication No. 2005/0215654 A1, entitled ULTRAVIOLET-CURABLE WATERBORNE COATING, by Wright, et al., discloses the use of an ultraviolet-curable, water based coating for weatherstrips, windshield wipers, door seals, trunk seals, sunroof seals, windshield seals and the like providing ice release, noise resistance, solvent resistance, abrasion resistance, weathering resistance, etc. Similarly, GB 2383332 discloses sealing systems for automotive parts comprising a flexible thermoplastic extrusion and a UV curable coating.

EP published application 1,728,809 A2 entitled WEATHERSTRIP COATING, by Dewiit, et al., discloses the use of a high viscosity coating for use in weatherstripping, windshield wiper blades, sunroof seals and similar applications that may be applied to an extruded rubber and the die head providing weathering resistance, solvent resistance, low noise and ice release. However, this high viscosity coating requires curing by a convection oven within the existing operation.

Thus, a non-temporary and more cost-effective need exists to improve upon the performance for squeak and itch resistance as well as freeze release associated with weatherstrips for automotive vehicles.

### SUMMARY OF THE DISCLOSURE

A weatherstrip having improved performance for squeak and itch resistance and freeze release includes an elongated member having flock along a pre-determined portion of the member and a coating layer disposed over the flock.

According to the invention, the coating is crosslinkable UV curable where the coating self-crosslinks when activated by the photoinitiator's exposure to UV light. The coating then adheres to the elongated member.

A method of forming a weatherstrip having improved performance for squeak and itch resistance and freeze release includes providing an elastomeric body, flocking at least a portion of the body and applying a coating layer over the flock.

The method further includes curing the layer with UV.

A primary benefit of the disclosure is the ability to improve performance of the weatherstrip.

One advantage of the disclosure resides in the improved squeak and itch resistance, and improved freeze release.

Yet another benefit is the ability to easily incorporate the process into an existing manufacturing process without undue line extension or capital investment.

Still other features and benefits of the present disclosure will become apparent upon reading and understanding the following detailed description.

### BRIEF DESCRIPTION OF THE DRAWINGS

FIGURE 1 is a perspective view of an automotive vehicle showing weatherstrips incorporating the subject disclosure.
FIGURE 2 is a cross sectional view of a coated, flocked, extruded weatherstrip in accordance with this disclosure.
FIGURE 3 is a diagrammatic process diagram showing a method for producing coated, flocked, extruded weatherstrip in accordance with this disclosure.
FIGURE 4 is a diagrammatic process diagram showing another method for producing coated, flocked weatherstrip in accordance with this disclosure.

### DETAILED DESCRIPTION OF THE PREFERRED EMBODIMENTS

Aspects of an exemplary embodiment relate to a weatherstrip or seal, a method of forming a weatherstrip or seal, and a coating layer comprising a cross-linkable UV curable resin. The coating layer advantageously includes a cross-linkable UV curable resin. With this coating layer disposed on flocked fibers attached to a pre-determined portion of a weatherstrip or seal, the coating layer can improve the performance for squeak and itch resistance by a reduction of about 0.8 sones and freeze release by increase of about 70% and up to about 88% when compared to a weatherstrip that does not include the coating layer but only incorporate flock on the weatherstrip. As will be appreciated, this improvement is significant to reduce sones (unit of loudness) in the wet condition, and likewise the reduced Newtons of force can be represented by the percent reduction in force and again, these improvements are significant.

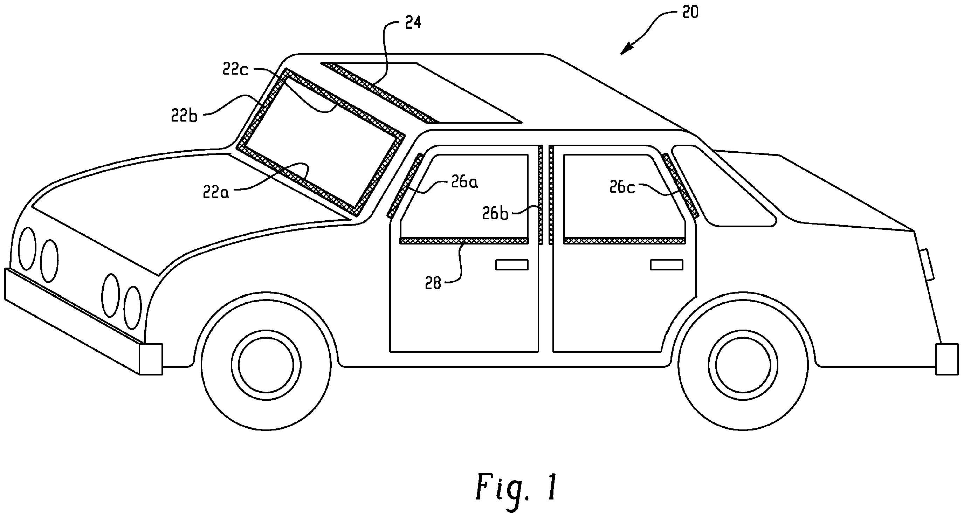

Turning initially to FIGURE **1****,** there is shown an automotive vehicle **20** of the type having a variety of weatherstrips that may be improved by incorporating the teaching of the present disclosure. For example, these weatherstrips may be used as windshield weathersrip members **22a, 22b,** and **22c,** sun roof weatherstrip members **24,** inner and outer belt weatherstrips **28** (inner belt not shown) and A-, B-, and C- Pillar weatherstrip members **26a, 26b,** and **26c,** and glass runs. Of course, one skilled in the art will appreciate that this list is not intended to be restrictive or all encompassing but rather exemplary of different types of weatherstrip or seals that may employ the teachings of the present disclosure. One or more of these components may require squeak and itch resistance, freeze release or a combination thereof.

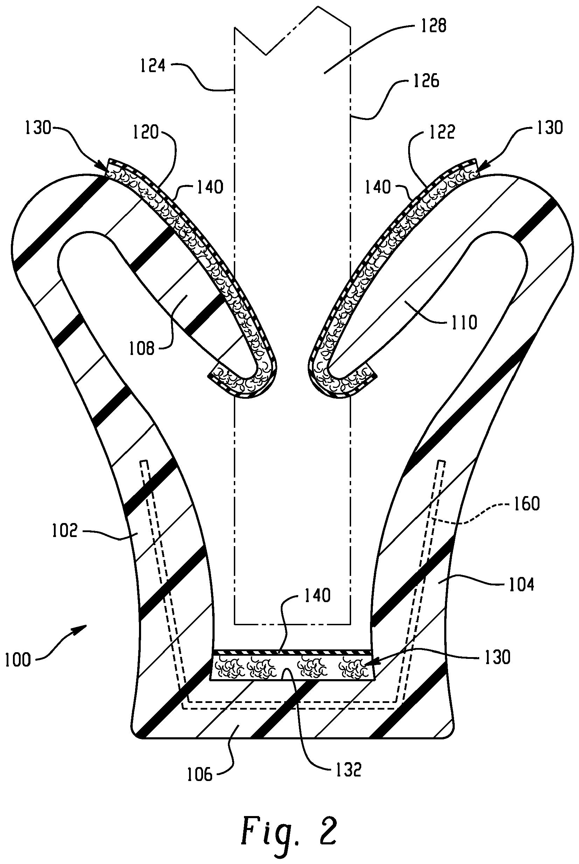

With reference to FIGURE 2, there is illustrated, in a cross sectional view, an exemplary embodiment of a weatherstrip or seal **100** shown as a glass run seal that has a generally U-shape. More particularly, the glass run weatherstrip **100** includes first and second legs **102, 104** that extend outwardly from base **106.** Outer or terminal ends of legs **102, 104** include seal lips **108, 110** respectively, that angle inwardly toward the opposite leg in a generally conventional manner. Each seal lip includes a region **120, 122** that is adapted for sliding, sealing engagement with an associated surface (shown here as opposite surfaces **124, 126** of movable window **128**)**.** It will also be appreciated that the seal lips are shown in a normal, unbiased position since the window is represented in dotted line. In actual use, the seal lips/legs will deflect as the window moves inwardly and outwardly relative to the glass run.

Preferably, and as is known, the seal lip regions **120, 122** may be provided with a low friction surface or coating that permits the sliding, sealing engagement with the window surfaces. It is common for the low friction surface to be a flock or flocked fibers **130** that are formed on those regions where dynamic interface occurs. Thus, the seal lip regions include flock **130**, and other regions of the weatherstrip such as the inner surface **132** of the base **106** may also include flock **130**. Although other surface areas of the weatherstrip may include a low friction surface flock, the surface treatment is typically limited to those areas that provide the dynamic seal interface. In other instances, flock may not be used and instead a coating having a low friction or lubricious surface is used.

Hence, a substantial improvement in freeze release, as well as an improved squeak and itch resistance, was achieved by using flock **130** over a predetermined portion of a weatherstrip body (e.g., glass run **102**) in conjunction with a coating layer **140** over the flock. The coating layer is a material that will self cross-link and adhere to the flock and that is received on the material that forms the weatherstrip body (typically rubber or elastomer). In addition, the coating layer **140** is ultraviolet (UV) curable. This is important because the ability to UV cure the coating layer allows the addition of this processing/manufacturing step to the existing processing or manufacturing line with only limited additional capital expenditure, namely an applicator or application stage and an irradiation or UV source disposed immediately downstream that cures the coating layer.

An exemplary coating layer includes the product Cooper-Standard Automotive SPS278 Black Waterborne UV Cure Coating. In a preferred embodiment, the final dry film thickness is on the order of approximately 20-25 microns.

The exemplary weatherstrip has improved performance for squeak and itch resistance. With a cross-linkable UV curable coating layer applied on flocked fibers attached to a predetermined portion of the weatherstrip or seal, the exemplary embodiment has improved performance for squeak and itch resistance of a reduction of about 0.8 sones compared to a weatherstrip embodiment that does not include a coating layer over the flock (i.e., flock only).

Furthermore, the exemplary weatherstrip has improved freeze release. With a cross-linkable UV curable coating layer applied on flocked fibers attached to a predetermined portion of the weatherstrip or seal, the exemplary embodiment exhibits improved performance for freeze release on the order of about 70% to about 80% compared to an embodiment having flock without a coating layer.

### Squeak and Itch Resistance

The exemplary weatherstrip has considerable performance improvement for squeak and itch resistance in comparison to previously uncoated flocked fibers attached to a pre-determined portion of the exemplary embodiment. Table 1 shows measured squeak and itch resistance using a conventional test method GM 9842P: Revision D (Measurement of Acoustic Output of Dynamic Trim and Sealing Components Involved in Shear Movement). The value for the wet measurement indicates the embodiment of coating over flocked fibers is at least a reduction of about 0.8 sones.

**Table 1. Squeak and Itch Test Results**

| GMNA GM9842P: Revision D (average of 9 measurements) | **Uncoated (flocked fibers only)** | **Cooper-Standard Automotive SPS278 Coating (coating over flocked fibers)** |
|---|---|---|
| Dry | | |
| High | 3.0 sones | 3.2 sones |
| Low | 2.2 sones | 2.3 sones |
| **Average** | **2.6 sones** | **2.6 sones** |

| Wet | | |
|---|---|---|
| Dry | 3.4 sones | 2.3 sones |
| Low | 2.4 sones | 1.6 sones |
| **Average** | **2.8 sones** | **2.0 sones** |

### Freeze Release

The exemplary weatherstrip or seal, furthermore, has considerable improvement for freeze release in comparison to previously uncoated flocked fibers attached to a pre-determined portion of the exemplary embodiment. Table 2 shows measured freeze release using a conventional test method GM 9894D (Freeze Characteristics of Weatherstrips). The value indicates the embodiment of Cooper-Standard Automotive SPS 278 crosslinkable UV curable coating over flocked fibers is about an 80% improvement.

**Table 2. Freeze Release Results**

| | Uncoated (flocked fibers only) | Cooper-Standard Automotive SPS278 Coating (coating over flocked fibers) |
|---|---|---|
| **Freeze Release** (in Newtons) | 50.658 | 6.159 |

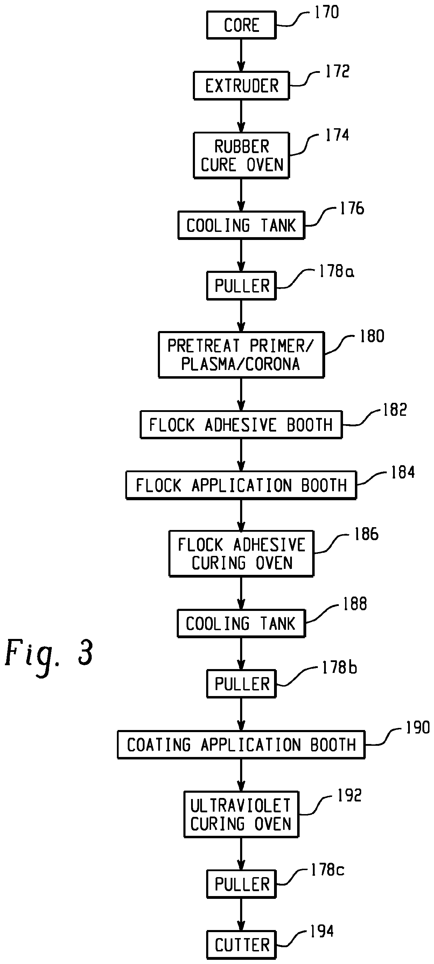

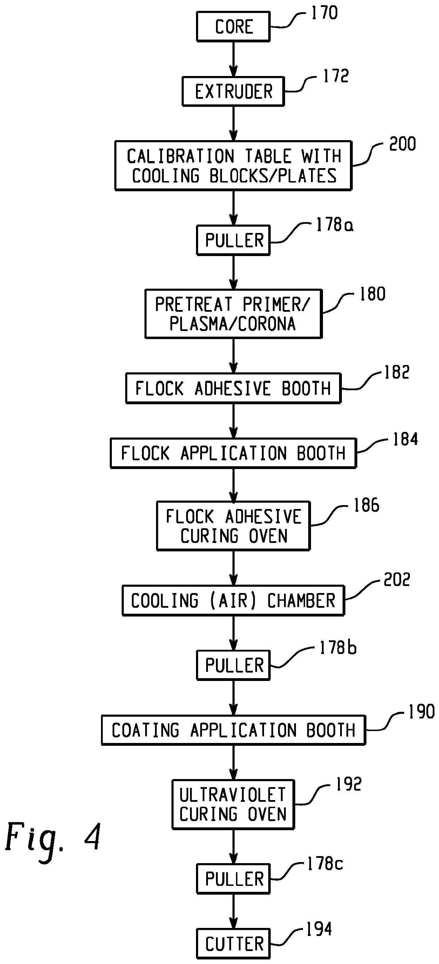

Figure **3** is generally representative of the processing steps associated with the manufacture of the weatherstrip of the present disclosure. More particularly, a rigid core **160** (represented in Figure 2 even though the illustrated glass run or another type of weatherseal may not employ a core) is introduced into the line (step **170**). The core can be inserted in a desired configuration or roll-formed into the desired shape. Next, the elastomer body is received over the core (if a core is used) (step **172**). Usually, the elastomer is extruded. The extruded elastomer is advanced to cure in an oven (step **174**). It is then cooled (step **176**). The extruded elastomer continues to be advanced through the line by a puller (steps **178a, 178b,** and **178c).** Flock is then applied as represented at step **182, 184, 186** and **188.** Frequently, the coating layer is applied over the flock as represented by step **190**, then cured at step **192** and cut at step **194**. Of course, Figure 3 is representative of an extruded rubber line and it will be appreciated that the disclosure also has application with a thermoplastic (TP) material (which includes TPE, TPO, TPV, etc.), for example, such as shown in Figure 4. The steps in Figure 4 are similar to those in Figure 3 but do not require the rubber cure oven **174** and the cooling tank **176**. Instead, a calibration table **200** containing cooling blocks and/plates is used to cool the material after it leaves the extruder. In addition, the cooling tank **188** in the Figure 3 process is substituted with a cooling chamber **202,** such as a cooling air chamber.

In comparison to a thermally cured cross-linkable coating disposed on flocked fibers attached to a predetermined portion of a weatherstrip, the cross-linkable UV curable coating layer disclosed herein has specific advantages. For example, the requirement for additional convection ovens is eliminated to cure the coating layer. Thereby, replacing these ovens is a much shorter UV cure unit.

According to the invention, the weatherstrip includes an elongated member having along a pre-determined portion of the member flocked fibers and a coating layer disposed over the flocked fibers, which serve for use on an automotive component. The elongated member includes an extrusion, may optionally include a core, flocked fibers attached to a predetermined portion of the member and a coating layer disposed over the flocked fibers. The extrusion is an elastomeric material and the core is metal or a rigid, non-metal material. Prior to applying the coating layer, the flocked fibers are fully prepared and cured. The coating layer is a cross-linkable UV curable resin containing composition.

The cross-linkable UV curable resin can be selected from a combination of one or more polyurethane dispersions and one or more photoinitiators. The polyurethane dispersions provide flexibility, improved weathering resistance and solvent resistance, and double bonds for UV cure with a photoinitiator. The photoinitiator component of the coating layer provides UV cure through radical polymerization with the polyurethane dispersion(s).

The invention has been described with reference to the preferred embodiments. Obviously, modifications and alterations will occur to others upon reading and understanding the preceding detailed description.

## Claims

1. A weatherstrip for use on an automotive component comprising:
an elongated member (100) having flock (130) along a pre-determined portion; and a coating layer (140) disposed over the flock for improving at least one of (i) freeze release and (ii) squeak and itch resistance, **characterized in that** the coating (140) includes a cross-linkable UV curable resin.

2. The weatherstrip of any preceding claim, wherein the weatherstrip further includes a rigid core (160) at least partially received in the elongated member (100).

3. The weatherstrip of any preceding claim, wherein the coating layer has a thickness of 5 to 40 µm, more preferably 20 to 25 µm, to provide improved squeak and itch resistance and freeze release.

4. A method of forming a weatherstrip comprising:
providing an elastomeric or plastomeric body (100);
flocking at least a portion (108, 110, 132) of the body; and
applying a coating layer (140) over the flock to improve at least one of (i) freeze release and (ii) itch and squeak resistance, **characterized in that**
the coating layer comprises a cross-linkable UV curable resin.

5. The method of claim 4, wherein the providing step includes attaching flocked fibers (130) along a predetermined portion (108, 110, 132) of the body.

6. The method of claim 5, wherein the flocking step includes a full curing after attaching the flocked fibers (130) along a prederterming portion of the body.

7. The method of claim 4, wherein the coating layer is cured for less than 25 seconds.

8. The method of any one of claims 4 to 7, wherein in the coating layer (140) is irradiated for 1 to 9 seconds to cure the layer.

9. The method of any one of claims 4 to 8, wherein the coating layer is applied at a thickness of 5 to 40 µm, more preferably 20 to 25 µm, to provide for improved squeak and itch resistance and freeze release.

10. The method of any one of claims 45 to 9, wherein the providing step includes the step of extruding the body (100).

11. The method of any one of claims 4 to 10, wherein the providing step includes incorporating a core in the body (100).

## Patentansprüche

1. Wetterstreifen zur Verwendung an einer Automobilkomponente, umfassend:
ein langgestrecktes Element (100), das eine Beflockung (130) entlang eines vorbestimmten Teils hat; und eine Beschichtungsschicht (140), die über der Beflockung angeordnet ist, um mindestens eines aus (i) einer geringeren Neigung des Festfrierens und (ii) einem verbesserten Quietschverhalten und einer verringerten Erregung von Juckreiz vorzusehen, **dadurch gekennzeichnet, dass** die Beschichtung (140) ein vernetzbares UV-aushärtbares Kunstharz aufweist.

2. Wetterstreifen gemäß einem der vorhergehenden Ansprüche, wobei der Wetterstreifen ferner einen steifen Kern (160) aufweist, der mindestens teilweise in dem langgestreckten Element (100) aufgenommen ist.

3. Wetterstreifen gemäß einem der vorhergehenden Ansprüche, wobei die Beschichtungsschicht eine Dicke von 5 bis 40 µm, noch besser 20 bis 25 µm, hat, um ein verbessertes Quietschverhalten und eine verringerte Erregung von Juckreiz und eine geringere Neigung des Festfrierens vorzusehen.

4. Verfahren zur Ausbildung eines Wetterstreifens, umfassend:
Vorsehen eines Elastomer- oder Plastomerkörpers (100);
Beflocken mindestens eines Teils (108, 110, 132) des Körpers; und
Aufbringen einer Beschichtungsschicht (140) über der Beflockung, um mindestens eines aus (i) einer geringeren Neigung des Festfrierens und (ii) einem verbesserten Quietschverhalten und einer verringerten Erregung von Juckreiz vorzusehen, **dadurch gekennzeichnet, dass**
die Beschichtungsschicht ein vernetzbares UV-aushärtbares Kunstharz aufweist.

5. Verfahren gemäß Anspruch 4, wobei der Schritt des Vorsehens aufweist:
Befestigen von Beflockungsfasern (130) entlang eines vorbestimmten Teils (108, 110, 132) des Körpers.

6. Verfahren gemäß Anspruch 5, wobei der Schritt des Beflockens ein vollständiges Aushärten nach der Befestigung der Beflockungsfasern (130) entlang eines vorbestimmten Teils des Körpers aufweist.

7. Verfahren gemäß Anspruch 4, wobei die Beschichtungsschicht über weniger als 25 Sekunden ausgehärtet wird.

8. Verfahren gemäß einem der Ansprüche 4 bis 7, wobei die Beschichtungsschicht (140) über 1 bis 9 Sekunden bestrahlt wird, um die Schicht auszuhärten.

9. Verfahren gemäß einem der Ansprüche 4 bis 8, wobei die Beschichtungsschicht mit einer Dicke von 5 bis 40 µm, noch besser 20 bis 25 µm, aufgebracht wird, um ein verbessertes Quietschverhalten und eine verringerte Erregung von Juckreiz und eine geringere Neigung des Festfrierens vorzusehen.

10. Verfahren gemäß einem der Ansprüche 45 bis 9, wobei der Schritt des Vorsehens einen Schritt des Extrudierens des Körpers (100) aufweist.

11. Verfahren gemäß einem der Ansprüche 4 bis 10, wobei der Schritt des Vorsehens ein Einfügen eines Kerns in den Körper (100) aufweist.

## Revendications

1. Bourrelet d'étanchéité destiné à être utilisée sur un composant automobile comprenant :
un élément allongé (100) ayant un flocage (130) le long d'une partie prédéterminée ; et une couche de revêtement (140) disposée sur le flocage pour améliorer au moins un élément parmi : (i) un antigel et (ii) une résistance aux grincements et aux cliquetis, **caractérisé en ce que** le revêtement (140) comprend une résine réticulable durcissable aux UV.

2. Bourrelet d'étanchéité selon l'une quelconque des revendications précédentes, dans lequel le bourrelet d'étanchéité comprend en outre un noyau rigide (160) au moins partiellement reçu dans l'élément allongé (100).

3. Bourrelet d'étanchéité selon l'une quelconque des revendications précédentes, dans lequel la couche de revêtement a une épaisseur de 5 à 40 µm, plus préférablement de 20 à 25 µm, pour fournir une résistance améliorée aux grincements et aux cliquetis ainsi à l'antigel.

4. Procédé de formation d'un bourrelet d'étanchéité comprenant les étapes consistant à :
fournir un corps élastomère ou plastomère (100) ;
floquer au moins une partie (108, 110, 132) du corps ; et
appliquer une couche de revêtement (140) sur le flocage pour améliorer au moins un élément parmi : (i) un antigel et (ii) un résistance aux grincements et aux cliquetis, **caractérisé en ce que**
la couche de revêtement comprend une résine réticulable et durcissable aux UV.

5. Procédé selon la revendication 4, dans lequel l'étape de fourniture comprend la fixation de fibres floquées (130) le long d'une partie prédéterminée (108, 110, 132) du corps.

6. Procédé selon la revendication 5, dans lequel l'étape de flocage comprend un durcissement complet après avoir fixé les fibres floquées (130) le long d'une partie prédéterminée du corps.

7. Procédé selon la revendication 4, dans lequel la couche de revêtement est durcie pendant moins de 25 secondes.

8. Procédé selon l'une quelconque des revendications 4 à 7, dans lequel la couche de revêtement (140) est irradiée pendant 1 à 9 secondes pour durcir la couche.

9. Procédé selon l'une quelconque des revendications 4 à 8, dans lequel la couche de revêtement est appliquée à une épaisseur de 5 à 40 µm, plus préférablement de 20 à 25 µm, pour fournir une résistance améliorée aux grincements et aux cliquetis ainsi qu'à l'antigel,

10. Procédé selon l'une quelconque des revendications 4 à 9, dans lequel l'étape de fourniture comprend l'étape d'extrusion du corps (100).

11. Procédé selon l'une quelconque des revendications 4 à 10, dans lequel l'étape de fourniture comprend l'incorporation d'un noyau dans le corps (100).
